# EUROPEAN PATENT SPECIFICATION

(11) **EP 2 809 518 B1**
(45) Date of publication and mention of the grant of the patent: **26.04.2017**
(21) Application number: 13707939.8
(22) Date of filing: 01.02.2013
(51) Int. Cl.: B32B 27/08, B32B 27/30, B32B 27/32, B65B 3/26

(54) **LOW MODULUS SHRINK COMPLIANT LABELS**
SCHRUMPFKOMPATIBLE ETIKETTEN MIT GERINGEM MODUL
FILMS CONFORMES THERMORÉTRACTABLES À FAIBLE COEFFICIENT DE RÉDUCTION

(30) Priority: 02.02.2012 US 201261594225 P; 15.05.2012 US 201261647224 P
(43) Date of publication of application: 10.12.2014
(73) Proprietor: Avery Dennison Corporation, Pasadena, CA 91103 (US)
(72) Inventor: HENDERSON, Kevin, O., Willoughby Hills, OH 44094 (US)
(74) Representative: Bates, Philip Ian
(86) International application number: PCT/US2013/024298
(87) International publication number: WO 2013/116612

(56) References cited:
- WO-A1-00/13887
- WO-A1-2011/143382
- US-A1- 2005 202 239
- US-A1- 2009 233 070

## Description

### FIELD

The present subject matter relates to label assemblies and more particularly to multilayer label assemblies for heat shrinkable packages.

### BACKGROUND

Heat shrinkable flexible wall containers such as bags or pouches, and heat shrinkable wrapping have been used extensively for packaging and/or encapsulating a wide array of goods. A prime application of heat shrinkable containers or wrap is packaging perishable food items such as red meats and poultry. Typically, a food item is placed within a heat shrinkable bag, air is removed or otherwise evacuated from the bag interior, the bag is sealed close, and the bag is then subjected to rapid heating in order to induce shrinkage of the bag about the bag contents, e.g., the food item. After packaging and shrinking, one or more paper or film labels are then applied to the exterior of the bag as desired to convey information such as bag contents, weight, expiration date, supplier, etc. As an alternative or in addition to applying paper or film labels, it is also known to print directly on the bag exterior after shrinking.

Applying paper or film labels or printing on the exterior of a shrunk bag or other flexible wall container is difficult and presents numerous issues. After shrinkage, the bag or flexible wall container typically exhibits an irregular contour corresponding to the contents of the bag or container. As will be appreciated, application and retention of labels to irregular non-planar surfaces is challenging and may require particular application techniques and adhesives or attachment strategies. Printing on irregular, non-planar surfaces is also particularly difficult.

In view of these and other issues, it would be desirable to provide a packaging system and method in which post-shrink labeling or printing could be avoided, yet whereby desired information and the like could be provided on the package exterior. WO00/13887discloses a non-oriented multilayer label assembly, suitable for application to a heat shrinkable package, comprising a core layer comprising a blend of 70% of a random propylene copolymer, and 30% by weight of ethylene vinyl acetate (EVA) and first and second printable skin layers which comprise a blend of 50% by weight of the propylene homopolymer and 50% by weight of EVA.

### SUMMARY

The difficulties and drawbacks associated with previous practices are overcome in the present label assemblies, articles or packages containing the label assemblies, and related methods.

In another aspect, the present subject matter provides a non-oriented multilayer label assembly adapted for application to a deformable package. The label comprises a core layer including at least a majority proportion of ethylene vinyl acetate (EVA). The core layer defines an outer face and an oppositely directed inner face. The label also comprises a print-receptive outer layer disposed on the outer face of the core layer. The print-receptive outer layer includes one of (i) a blend including ethylene vinyl acetate (EVA) and homopolypropylene (HPP), and (ii) polyvinyl alcohol (PVOH). The label assembly also comprises an inner layer disposed on the inner face of the core layer. The inner layer includes ethylene vinyl acetate (EVA) and homopolypropylene (HPP).

In another aspect, the present subject matter provides a method of labeling a heat shrinkable substrate. The method comprises providing a non-oriented multilayer label assembly including a core layer having at least a majority proportion of ethylene vinyl acetate (EVA), an outer layer disposed on the core layer, an inner layer disposed on the core layer, and at least one region of adhesive disposed on the inner layer. The method also comprises providing a heat shrinkable substrate having an outer surface. The method also comprises adhering the label assembly to the outer surface of the heat shrinkable substrate to form an intermediate assembly. And, the method additionally comprises subjecting the intermediate assembly to conditions that will result in heat shrinkage of the substrate, whereby the substrate undergoes a dimensional change in at least one direction in the region of the label adhered thereto.

As will be realized, the subject matter described herein is capable of other and different embodiments and its several details are capable of modifications in various respects, all without departing from the claimed subject matter. Accordingly, the drawings and description are to be regarded as illustrative and not restrictive.

### BRIEF DESCRIPTION OF THE DRAWINGS

Figure 1 is a schematic cross sectional view of one version of a multilayer label assembly in accordance with the present subject matter.
Figure 2 is a schematic cross sectional view of another version of a multilayer label assembly in accordance with the present subject matter.
Figure 3 is a schematic cross sectional view of the label assembly of Figure 1 applied to a heat shrinkable substrate prior to heat shrinking.
Figure 4 is a schematic cross sectional view of the label assembly and substrate of Figure 3 after heat shrinking.
Figure 5 is a graph illustrating machine direction shrinkage of two label samples and a commercially available heat shrinkable material.
Figure 6 is a graph illustrating storage modulus of the same two label samples and commercially available heat shrinkable material assessed in Figure 5.
Figure 7 is a graph comparing conformability of four label samples and a conventional film.
Figure 8 is a graph comparing die cut resistance of the samples and film assessed in Figure 7.

### DETAILED DESCRIPTION OF THE EMBODIMENTS

The present subject matter relates to multilayer labels that can be adhered to a heat shrinkable substrate, package, or container prior to heat shrinking the substrate. Once applied, the label and substrate can be subjected to one or more operations to induce or cause heat shrinking of the substrate. As the substrate undergoes deformation, i.e., shrinking, the label accommodates the dimensional changes and/or stresses from the substrate in a manner such that the label avoids the formation of wrinkles, darts, or other undesirable aesthetic defects. In many embodiments, the label is not oriented or stretched, and so by itself, is not heat shrinkable. However, when applied to a heat shrinkable substrate which is subsequently subjected to a heat shrink operation, the label passively accompanies the substrate during deformation. This phenomenon is explained in greater detail herein.

The multilayer labels comprise a core layer, a print-receptive outer layer, and an inner layer. The core layer is disposed between the outer layer and the inner layer. The core layer defines an outer face and an oppositely directed inner face. The print-receptive outer layer is disposed on the outer face of the core layer. The inner layer is disposed on the inner face of the core layer. In certain versions of the label, one or more tie layers are also included, typically between the core layer and one or both of the outer layer and the inner layer. Additional details as to each layer in the label assembly are as follows.

### Core Layer

The core layer is typically disposed within the interior of the multilayer label assembly. In certain versions of the labels, the core layer constitutes the majority component, i.e., layer, of the multilayer assembly in terms of thickness and/or weight.

The core layer includes at least a majority portion of ethylene vinyl acetate (EVA). The core layer can be formed from a variety of materials so long as the material exhibits a softening point or softening temperature that is less than the heat shrink temperature of the substrate, package, or container to which the label is attached. Specifically, the softening temperature is expressed as the Vicat softening point, as known in the art. Typically, the material of the core layer also exhibits a modulus that is less than that of the substrate, package, or container at the heat shrink temperature. The term "modulus" as used herein refers to Young's modulus which is the ratio of stress to strain (or the slope of a stress-strain curve). Young's modulus is also known as the modulus of elasticity or tensile modulus. These characteristics enable the label to readily adapt to, and accommodate the deforming substrate during heat shrinking.

The core layer includes ethylene vinyl acetate (EVA). Acceptable grades of ethylene vinyl acetate which are commercially available include CELANESE ATEVA 1821A and 1807A, both available from Celanese of Edmonton, Alberta, Canada. These materials contain 18% vinyl acetate and exhibit melt indices (MI) of 3.0 and 0.7, respectively.

It is also contemplated that the core layer can also include one or more alpha-olefins which are combined via blending with the ethylene vinyl acetate. In these embodiments, a majority proportion of ethylene vinyl acetate is combined with a minority proportion of at least one alpha-olefin. In certain versions, the core layer comprises about 60% ethylene vinyl acetate and about 40% alpha-olefin(s). The alpha-olefin(s) can include an ethylene alpha-olefin. An example of a suitable alpha-olefin which is commercially available is TAFMER A-4070S from Mitsui Chemicals America, Inc. of Rye Brook, New York.

It will be understood that in no way is the present subject matter limited to any of these materials or aspects described for the core layer. Instead, a wide array of materials and material combinations can be utilized for the core layer. It is also contemplated to utilize multiple core layers as in the examples described herein.

### Print-Receptive Outer Layer

The print-receptive outer layer is disposed on the core layer and more particularly, on or along an outer face of the core layer. The print-receptive outer layer is adapted for receiving printing or other indicia and providing an attractive outer face for the label assembly. A variety of materials can be included in the outer layer.

In one version, the outer layer includes ethylene vinyl acetate (EVA) and homopolypropylene (HPP). In another version, the outer layer includes polyvinyl alcohol (PVOH). For outer layers including ethylene vinyl acetate and homopolypropylene, it is also contemplated to include one or more alpha-olefins and to further include one or more supplemental antiblock or antiblocking agents. Representative compositions for the outer layer include, but are not limited to (i) about 65% ethylene vinyl acetate, about 25% homopolypropylene, and about 10% supplemental antiblock agent; (ii) about 39% ethylene vinyl acetate, about 26% alpha-olefin(s), about 25% homopolypropylene, and about 10% supplemental antiblock agent; (iii) about 65% ethylene vinyl acetate, about 25% homopolypropylene, and about 10% supplemental antiblock agent; and (iv) about 100% polyvinyl alcohol.

The previously noted commercially available grades of ethylene vinyl acetate noted for use in the core layer can be used in the print-receptive outer layer. The previously noted commercially available alpha-olefin noted for use in the core can be used in the print-receptive outer layer. An example of a suitable homopolypropylene and which is commercially available is P4G3Z-050F from Flint Hills Resources of Longview, Texas. That material exhibits a melt flow rate (MFR) of 4.2. Representative examples of suitable supplemental antiblock agents include AMPACET 401960 (Seablock 4) available from Ampacet Corporation of Tarrytown, New York. That antiblock agent is believed to be 3% poly(methyl methacrylate) (PMMA) in homopolypropylene. An example of a suitable polyvinyl alcohol (PVOH) is commercially available under the designation G-POLYMER OKS 8049P from Nippon Goshei of Osaka, Japan.

In certain embodiments, the barrier for reducing transmission of oxygen and odor such as hydrogen sulfide, preferably comprises EVOH and most preferably G-EVOH. That is, the preferred multilayer barrier assemblies preferably include a layer that includes at least one of EVOH and G-EVOH. The EVOH or G-EVOH is incorporated at nearly any effective concentration, however typical concentrations in a layer range from about 40% to about 100%, preferably from about 50% to about 100%, and most preferably from about 60% to about 100%. For certain applications, it is contemplated that G-EVOH be used and preferably a particular grade of ethylene vinyl alcohol copolymer commercially available under the designation G-SOARNOL from Nippon Gohsei can be used. As compared to conventional EVOH, G-SOARNOL polymers exhibit relatively low crystallinity and low melting point, and relatively high transparency, orientability, and shrinkability. The G-SOARNOL polymer system exhibits increased barrier properties as compared to conventional EVOH. Although not wishing to be bound to any particular theory, it is believed that G-SOARNOL is commercially available from Nippon under the designations SG634B and SG654B. These materials are believed to be copolymers of EVOH and polyvinyl alcohol (PVA). The SG654B material is reported to exhibit a melt flow rate of 3.5 g/10 min (ISOI 130, 230 C, 2.16 kg). The use of G-SOARNOL imparts to the resulting layer a higher gas barrier at a lower modulus. Essentially, the G-SOARNOL performs as a high ethylene content EVOH while maintaining the functionality associated with a low ethylene content EVOH. G-EVOH is also known as G-Polymer.

It will be understood that in no way is the present subject matter limited to any of these materials or aspects described for the outer layer. Instead, a wide array of materials and material combinations can be utilized for the outer layer.

### Inner Layer

The label assembly also includes an inner layer which is disposed along an inner face of the core layer. Typically, the inner layer provides a face for receiving or contacting an adhesive layer as described in greater detail herein. The inner layer can include a blend of ethylene vinyl acetate (EVA) and homopolypropylene (HPP). In an example, the inner layer includes about 65% ethylene vinyl acetate, about 25% homopolypropylene, and about 10% supplemental antiblock agents. The previously described commercial sources of these components noted for the core layer and the outer layer, can be used for the inner layer.

It will be understood that in no way is the present subject matter limited to any of these materials or aspects described for the inner layer. Instead, a wide array of materials and material combinations can be utilized for the inner layer.

### Tie Layer(s)

The label assembly can additionally include one or more tie layers in the label assembly such as for example (i) between the print-receptive outer layer and the core layer, and/or (ii) between the inner layer and the core layer. In one version of the label assembly using a print-receptive outer layer that includes polyvinyl alcohol (PVOH), a tie layer is provided between the outer layer and the core layer. That tie layer includes BYNEL E-418 available from DuPont, which is an anhydride-modified ethylene vinyl acetate polymer (also known as G-MAH).

It will be understood that in no way is the present subject matter limited to any of these materials or aspects described for the tie layer(s). Instead, a wide array of materials and material combinations can be utilized for the tie layer(s).

In the previously described layers, the homopolypropylene (HPP) and the supplemental antiblock agent (AB) primarily serve as processing aids. It is also noted that a slip agent product could potentially be used instead of the AB/HPP combination. A representative slip agent product is POLYBATCH MCE 5106 IM which is commercially available from A. Schulman of Akron, Ohio.

### Adhesive

In most versions of the label assembly, the label also comprises a layer of an adhesive disposed along the previously described inner layer. The particular adhesive should have characteristics which enable its use for attaching the label assembly to a heat shrinkable substrate, package, or container; continue to adhere the label to the substrate, package, or container during heat shrinking; and continue to adhere the label to the substrate, package, or container after heat shrinking. As explained in greater detail herein, in certain applications heat shrinking of a heat shrinkable material is performed by immersion of the material in a hot water bath. Thus, for such applications, the adhesive used in the label assembly should be resistant to hot water at least for a time period corresponding to the immersion or heating time period. Examples of adhesive types include but are not limited to hot melt adhesives, solvent adhesives, and emulsion adhesives. It is contemplated that a wide array of acrylic or acrylate adhesives can be used.

It will be appreciated that the term "layer" as used herein and particularly with regard to the adhesive includes both continuous and noncontinuous coatings, applications, and/or regions of adhesive. Thus, the various label assemblies described herein can utilize continuous layers of adhesive or pattern coated adhesive regions.

Representative details and aspects of hot melt adhesive are provided in one or more the following patents owned by the present assignee: US Patents 5,618,883; 6,740,711; 6,214,935; 5,093,406; 7,847,011; and 5,252,662. Representative details and aspects of solvent adhesives are provided in the following patent owned by the
present assignee, US Patent 6,187,432. Representative details and aspects of emulsion adhesives are provided in one or more of the following patents owned by the present assignee: US Patents 5,189,126; 5,264,532; 4,994,538; 5,183,459; 5,278,227; and 5,164,444.

### Release Liner

The multilayer label assembly will in many embodiments, also comprise a release liner. As will be appreciated, the release liner covers the adhesive layer and so is removed from the label assembly prior to adhering the label assembly to a substrate, package, or container. An example of a suitable release liner is a polyethylene terephthalate substrate having a siliconized or silicone coated face which is directed toward and contacts the adhesive layer.

Representative details and aspects of release liners are noted in one or more of the following US Patents owned by the present assignee: US Patents 5,084,317; 5,275,868; 6,352,768; 6,235,363; 6,183,862; 6,511,743; and 7,709,071.

### Additional Aspects

The label assemblies are non-oriented and so do not involve additional processing associated with axial or biaxially stretching. Thus the term "non-oriented multilayer label" as used herein refers to a multilayered label that is substantially free of post-formation orientation. It is contemplated that a relatively minor amount of machine direction (MD) orientation may exist in the label or layers thereof arising from layer or label formation. However, no post-formation machine direction orientation is imparted to the label or layer(s). Moreover, no cross direction (CD) orientation is imparted to the label or layer(s) thereof.

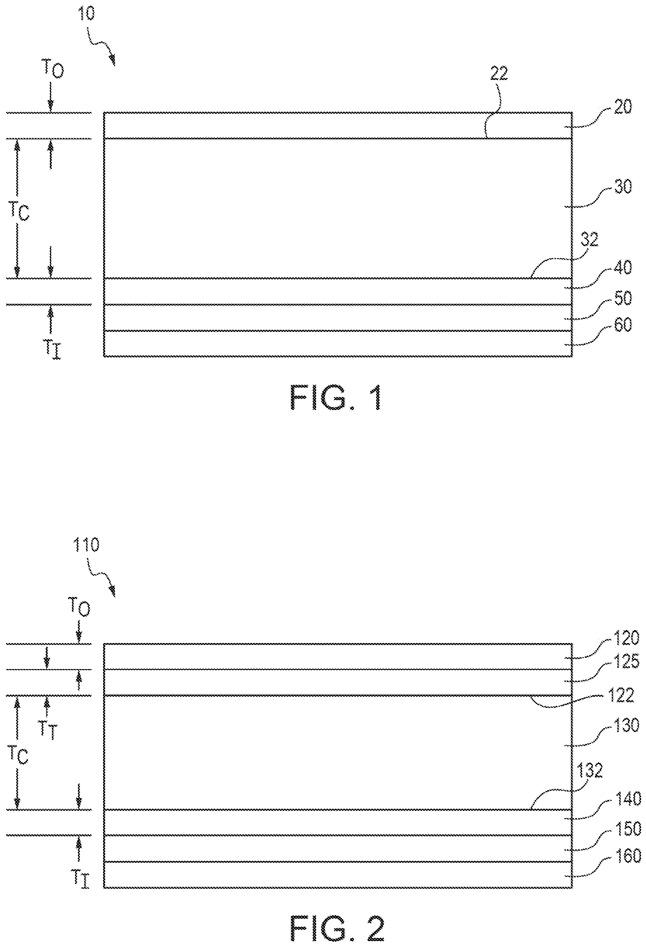

Figure 1 is a schematic cross sectional view of a label assembly 10 comprising a core layer 30 defining an outer or first face 22 and an oppositely directed inner or second face 32. The label assembly 10 also comprises a print-receptive outer layer 20 disposed along the outer face 22 of the core layer 30. And the label assembly 10 comprises an inner layer 40 disposed along the inner face 32 of the core layer 30. The label assembly 10 may also comprise an adhesive layer 50 and a release liner 60.

Figure 2 is a schematic cross sectional view of a label assembly 110 comprising a core layer 130 defining an outer face 122 and an oppositely directed inner face 132. The label assembly 110 also comprises a print-receptive outer layer 120 disposed along the outer face 122 of the core layer 130. And the label assembly 110 comprises an inner layer 140 disposed along the inner face 132 of the core layer 130. The label assembly 110 may also comprise an adhesive layer 150 and a release liner 160. The label assembly 110 also comprises a tie layer 125 disposed between the print-receptive outer layer 120 and the core layer 130.

Certain versions of the label assemblies utilize particular thicknesses and more specifically, combinations of thicknesses of the layers constituting the label assembly. For a label version such as depicted in Figure 1, a representative combination of layer thicknesses for the layers 20, 30, and 40, is 10%, 80%, and 10%, respectively. It will be understood that these percentages are based upon the total thickness of the polymeric film layers and do not include thicknesses associated with the adhesive layer and the release liner. More specifically, referring to Figure 1, the thickness of the outer layer 20 is shown as Tₒ and represents 10% of the total thickness of layers 20, 30, and 40. The thickness of the core layer 30 is depicted as T_{c} and represents 80% of the total thickness of layers 20, 30, and 40. And, the thickness of the inner layer 40 is shown as Tₗ and represents 10% of the total thickness of layers 20, 30, and 40.

Similarly, referring to the label version shown in Figure 2, a representative combination of layer thicknesses for the layers 120, 125, 130, and 140 is 5%, 10%, 75%, and 10%, respectively. As will be understood, these percentages are based upon the total thickness of layers 120, 125, 130, and 140, and do not include the thickness of the adhesive layer 150 and the release liner 160. Specifically, referring to Figure 2, the thickness of the outer layer 120 is shown as Tₒ and represents 5% of the total thickness of layers 120, 125, 130, and 140. The thickness of the tie layer 125 is shown as T_{T} and represents 10% of the total thickness of layers 120, 125, 130, and 140. The thickness of the core layer 130 is shown as T_{c} and presents 75% of the total thickness of layers 120, 125, 130, and 140. And, the thickness of the inner layer 140 is depicted as Tₗ and is 10% of the total thickness of the layers 120, 125, 130, and 140.

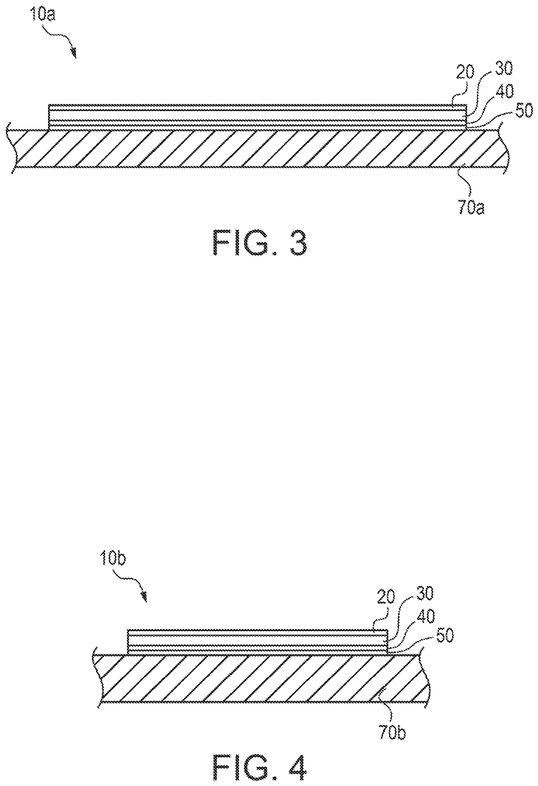

Figures 3 and 4 are schematic cross sectional views illustrating the label assembly of Figure 1 denoted as 10a, adhered to a substrate 70a prior to heat shrinking. The label assembly is adhered to the substrate 70a by removal of the release liner 60 (shown in Figure 1) to thereby expose the adhesive layer 50. The exposed face of the adhesive layer 50 is then contacted with the substrate 70a. The label assembly 10a and substrate 70a include the suffix "a" to denote their state prior to heat shrinking the substrate. Figure 4 schematically depicts the label assembly and the substrate after heat shrinking the substrate, and thus the label is designated as 10b and heat shrunk substrate as 70b. Although not a necessary consequence of heat shrinking the substrate, typically the thickness of the substrate after heat shrinkage, i.e., 70b is greater than the thickness of the substrate prior to heat shrinkage, i.e., 70a. As a result of the label assembly accommodating and adapting to the dimensional changes of the substrate, the thickness of the label after shrinkage of the substrate, i.e., 10b, is typically greater than the thickness of the label prior to such shrinkage, i.e., 10a.

The labels described herein can accommodate significantly large dimensional changes in a substrate, package, or container undergoing heat shrinking. For example, investigations have demonstrated that the labels can be adhered to an outer surface of a heat shrinkable film and then that film can be heat shrunk such that the film undergoes a dimensional change of up to 40% or more in both a longitudinal and a transverse direction.

As described herein, the exact structure of the multilayer label can be adjusted as desired in accordance with specific needs and applications. For example, it has been illustrated that the core layer of the subject label can be any of a variety of materials, featuring relatively elastic structures which can accommodate thermal and mechanical stresses without transferring such stresses to other label layer(s) laminated thereto. In this regard, the core layer could be a combination of several different layers of thermoplastic materials laminated together. In addition, it has been shown that protective layers can be laminated above the core layer as desired. Such protective layers might also be omitted and/or substituted by a thin layer of resin or the like, as appropriate.

It will be understood that it is contemplated that in addition to the use of ethylene vinyl acetate (EVA) in any of the noted layers described herein, one or more comonomers of ethylene may be suitable so long as the selected comonomers exhibit an appropriate softening temperature and modulus. Specifically in this regard, the melting point should be less than about 85°C and the storage modulus should be lower than the shrinking force of the heat shrinkable material. Accordingly, it is believed that materials such as one or more of the following may be suitable for use in the labels described herein: ethylene butyl acrylate (EBA), ethylene methacrylate (EMA), ethylene acrylic acid (EAA), ethylene methacrylic acid (EMAA) (i.e. SURLYN), and combinations thereof. In such alternative compositions, it is believed that a comonomer concentration of 12% or greater would provide favorable properties in the resulting label. Furthermore, it is also contemplated that one or more styrenic block copolymers could also be utilized in conjunction with EVA and/or any of the ethylene comonomers, such as for example styrene ethylene butadiene styrene (SEBS), styrene ethylene propylene styrene (SEPS), styrene isoprene styrene (SIS), styrene poly-isoprene/butadiene (SEEPS), and combinations thereof.

Two types of multilayered assemblies are of particular interest. One type includes a structure designated herein as "A/B/A." This designation lists the layers in order from inside to outside. Thus, the last noted layer is an outer layer. Typically, each "A" layer includes a blend of EVA and polypropylene, and the "B" layer includes EVA. The polypropylene can be homopolypropylene (HPP). In addition to EVA, any of the previously noted comonomers could be used. Specifically, for certain applications, nearly any low modulus comonomer having a melting point below the shrink temperature of the film, can be used.

Another type of multilayered assembly includes a structure designated herein as A/B/C/D. The "A" and "B" layers are as previously described. The "C" layer is a tie layer. The "D" layer typically includes PVOH and can be in the form of G-Polymer as described herein. However, it will be understood that the PVOH or G-Polymer can be replaced in part or entirely by nearly any amorphous polymer having a glass transition temperature which is less than the shrink initiation temperature. Examples of such amorphous polymers may include but are not limited to EVOH, Nylon, and/or polyethylene terephthalate (PET), and/or combinations thereof.

### Methods

The present subject matter also provides various methods of labeling heat shrinkable materials and use of the label assemblies described herein. Generally, the methods include an operation of providing one or more label assemblies as described herein. The release liner is removed to expose a face or region of the adhesive of the label assembly. It is contemplated that depending upon the type of adhesive, in certain embodiments the label assembly may not include a release liner. Regardless, after exposing a face or region of adhesive, the label assembly is applied to a surface of a heat shrinkable substrate, package, or container prior to heat shrinkage of the substrate, package, or container. Typically, the surface will be an outer surface, but it is contemplated that the label assembly could also be incorporated within one or more layers or within an interior region of the substrate, package, or container; or be located along an inner surface of the substrate, package or container. In addition, prior to application of the label to a heat shrinkable substrate, typically one or more printing or marking operations are performed to provide desired information or indicia on the label, i.e. visible along the outer face of the label.

Once the label is applied to the substrate, package, or container, the intermediate assembly is subjected to one or more heat shrink operations. Typically, this will involve heating the substrate, package, or container to a temperature and for a time period sufficient to induce or cause shrinkage of the substrate, package, or container. A wide array of techniques can be used to heat shrink such as exposure to air at desired relatively high temperatures, exposure to electromagnetic radiation of appropriate wavelength for example infrared (IR) wavelengths to increase the temperature of the substrate, and more typically immersion in a liquid of suitable temperature such as a hot water bath. Representative shrink temperatures for many heat shrinkable substrates are from about 70°C to about 90°C, with 85°C to 88°C being typical for many food packaging films. The time periods for exposure to heat shrinking operations are typically on the order of less than 10 seconds and for commercial processes, are often from about 1 to about 2 seconds. It will be appreciated that the present subject matter is not limited to any of these heat shrink techniques, temperatures, or times. As a result of being subjected to these conditions, the heat shrinkable materials undergo a dimensional change, e.g. reduction, in at least one direction in the region of the label adhered thereto. As previously described, during heat shrinking and associated deformation of the substrate, the label also undergoes dimensional changes to accommodate the deformation of the substrate yet remain adhered thereto and preferably without wrinkling or exhibiting other undesirable aesthetic defects.

### Examples

A collection of label samples corresponding to the present subject matter were prepared for further evaluation. Specifically, Table 1 set forth below summarizes the label samples which were prepared. As can be seen, four "clear" label samples 1-4 were prepared and a fifth "white" label sample was prepared. The white sample, i.e. sample 5, contained titanium dioxide in a primary core component and an auxiliary core component.

**Table 1 - Label Sample**

| Facestock Compositions | | | Clear Films | | | | | White | |
|---|---|---|---|---|---|---|---|---|---|
| | | Layer | Sample 1 | Sample 2 | Sample 3 | Layer | Sample 4 | Layer | Sample 5 |
| Print Skin | EVA (3.0 MI, 18% VA) | 10% | 65.0% | 39.0% | | 10% | 65.0% | 10% | 65.00% |
| | EVA (0.7 MI, 18% VA) | | | | 65.0% | | | | |
| | Homopolymer PP | | 25.0% | 25.0% | 25.0% | | 25.0% | | 25.00% |
| | α-Olefin Copolymer | | | 26.0% | | | | | |
| | Antiblock | | 10.0% | 10.0% | 10.0% | | 10.0% | | 10.00% |
| Primary Core | EVA (3.0 MI, 18% VA) | 70% | 100.0% | 60.0% | | 75% | 60.0% | 70% | 84.50% |
| | EVA (0.7 MI, 18% VA) | | | | 100.0% | | | | |
| | α-Olefin Copolymer | | | 40.0% | | | 40.0% | | |
| | Titanium Dioxide | | | | | | | | 10.85% |
| | ZN-Catalyzed LLDPE | | | | | | | | 4.65% |
| Auxilliary Core | EVA (3.0 MI, 18% VA) | 10% | 100.0% | 60.0% | | 10% | | 10% | 84.50% |
| | EVA (0.7 MI, 18% VA) | | | | 100.0% | | | | |
| | α-Olefin Copolymer | | | 40.0% | | | | | |
| | Titanium Dioxide | | | | | | | | 10.85% |
| | ZN-Catalyzed LLDPE | | | | | | | | 4.65% |
| | G-MAH Tie | | | | | | 100.0% | | |
| Adhesive Skin | EVA (3.0 MI, 18% VA) | 10% | 65.0% | 65.6% | | 5% | | 10% | 65.00% |
| | EVA (0.7 MI, 18% VA) | | | | 65.0% | | | | |
| | Homopolymer PP | | 25.0% | 25.0% | 25.0% | | | | 25.00% |
| | PVOH | | | | | | 100.0% | | |
| | α-Olefin Copolymer | | | | | | | | |
| | Antiblock | | 10.0% | 10.0% | 10.0% | | | | 10.00% |

Table 2 summarizes various physical label properties of the clear label samples 1-3 and the white label sample. Sample 4 is a comparative example.

**Table 2 - Physical Properties of Label Samples**

| Physical Properties | | Clear | | | White |
|---|---|---|---|---|---|
| | | Sample 1 | Sample 2 | Sample 3 | |
| Caliper (mils) | | 3.38 | 3.12 | 2.84 | 3.06 |
| Tensile Strength @ Break (kpsi) | MD | 3.05 | 2.72 | 3.66 | 3.16 |
| | CD | 1.89 | 1.64 | 2.33 | 2.55 |
| Ultimate Elongation (%) | MD | 363% | 340% | 208% | 556% |
| | CD | 1205% | 1338% | 1239% | 879% |
| Youngs Modulus (kpsi) | MD | 18 | 11 | 22 | 10 |
| | CD | 7 | 5 | 7 | 9 |
| Tear Strength (g/mil) | MD | 59 | 36 | 32 | 100 |
| | CD | 243 | 184 | 164 | 312 |
| 15º Bending Resistance (mN) | MD | 7.8 | 3.8 | 7.6 | 6.4 |
| | CD | 5.5 | 3.7 | 6.4 | 5.8 |
| Shrinkage (%) - 85° C/15 min | MD | 4.1% | 16.6% | 7.4% | 12.5% |
| | CD | -0.9% | 3.0% | -1.0% | 0.0% |

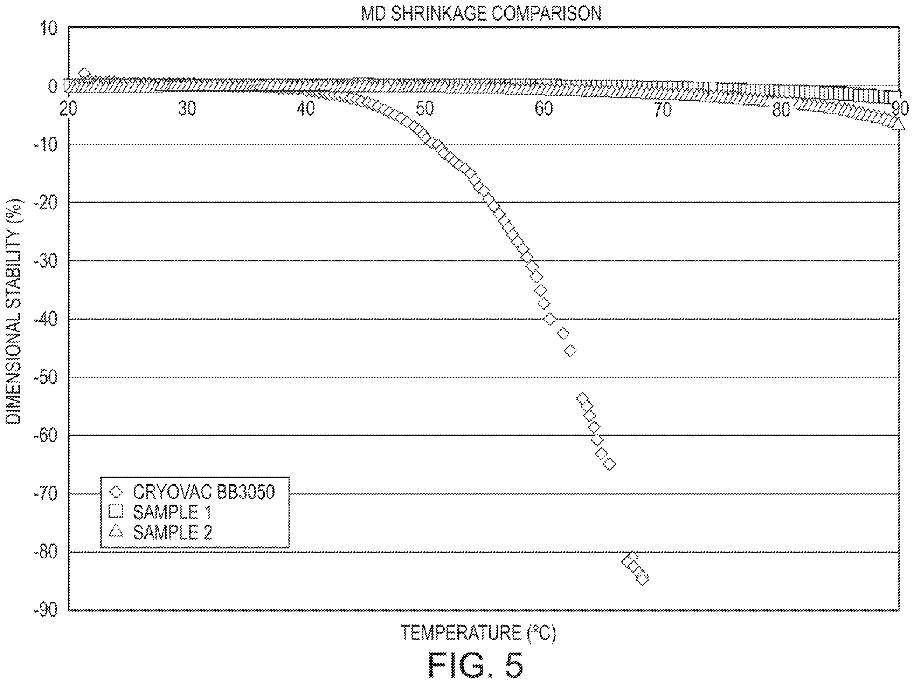

Comparative evaluations were performed to assess various aspects of the label samples. Figure 5 illustrates a comparison of label samples 1 and 2 and their shrinkage as compared to the heat shrinkage of a commercially available shrink bag. That shrink bag is available from Cryovac under the designation BB3050 BAG and is described as a high sealable, high barrier, multilayer, coextruded shrink bag for perishable food packaging. As evident in Figure 5, as the temperature increases, the shrink bag begins to shrink, i.e. undergo a dimensional reduction in the machine direction, around 40°C. In contrast, label samples 1 and 2 exhibited excellent dimensional stability at relatively high temperatures, for example up to about 90°C. Figure 5 illustrates that the label samples do not undergo any significant or appreciable shrinkage upon exposure to temperatures up to about 90°C.

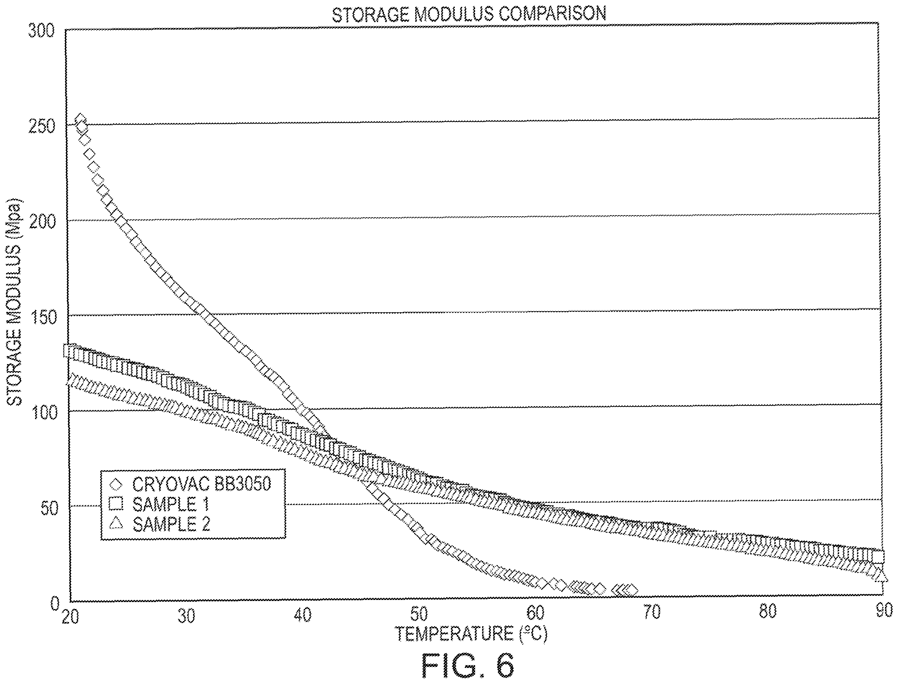

Figure 6 illustrates a comparison of storage modulus values for the label samples 1 and 2 over a range of temperatures as compared to that for the previously noted commercially available heat shrink bag material.

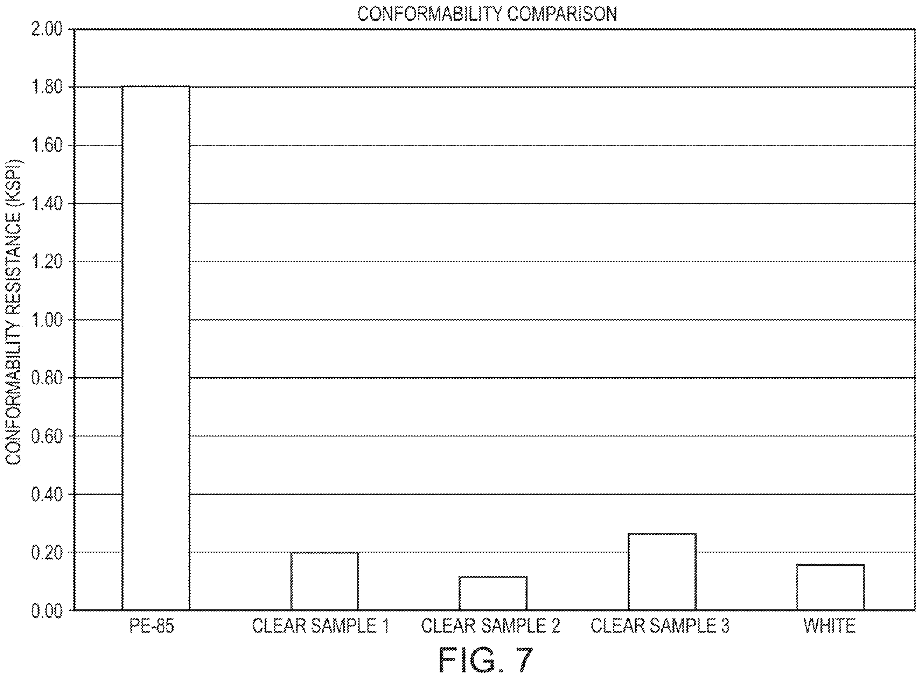

Figure 7 is a comparison between conformability resistance between four of the label samples and a conventional film used in the food packaging industry, PE-85. Figure 7 illustrates that all label samples exhibited a relatively high degree of conformability as compared to the PE-85 film.

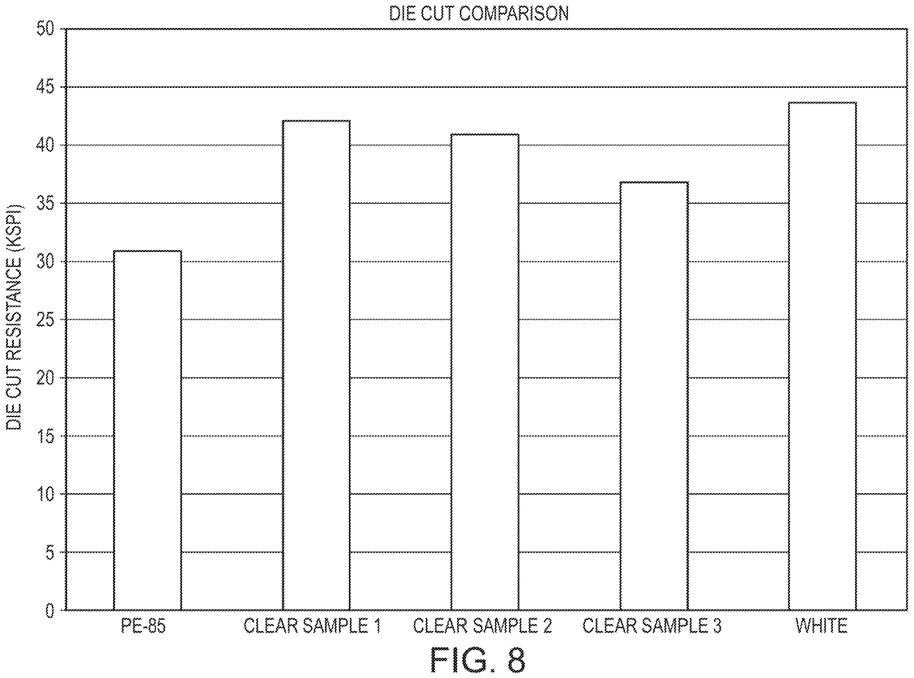

Figure 8 is a comparison between die cut resistance of four of the label samples and that of the previously noted PE-85 film. Each of the label samples exhibited a greater die cut resistance than the PE-85 film.

Although a prime application of the presently described labels is contemplated as being for labeling of heat shrinkable films, substrates, packages, and/or containers; it is also believed that the labels will find application to a wide array of deformable substrates. That is, the labels described herein can also be applied to substrates anticipated to undergo other types of dimensional changes or deformation and not just deformation resulting from heat shrinking. Specifically, the present subject matter is believed to be applicable to a wide array of different applications and processes. For example, the present subject matter is contemplated for use in roll-fed processes and in sleeve shrink operations. The present subject matter can be used in conjunction with shrink bags, shrink wrap, and shrink sleeves for example.

The present subject matter also includes heat shrinkable films, materials, packages and the like which include one or more labels as described herein. Thus, a complete system or kit of packaging material and labels can be provided.

Many other benefits will no doubt become apparent from future application and development of this technology.

As described hereinabove, the present subject matter solves many problems associated with previous strategies, systems and/or labels. However, it will be appreciated that various changes in the details, materials and arrangements of components or layers, which have been herein described and illustrated in order to explain the nature of the present subject matter, may be made by those skilled in the art without departing from the principle and scope of the claimed subject matter, as expressed in the appended claims.

## Claims

1. A non-oriented multilayer label assembly adapted for application to a deformable package, the label comprising:
a core layer including at least a majority proportion of ethylene vinyl acetate (EVA), the core layer defining an outer face and an oppositely directed inner face;
a print-receptive outer layer disposed on the outer face of the core layer, the print-receptive outer layer including one of:
(i) a blend including ethylene vinyl acetate (EVA) and homopolypropylene (HPP), and
(ii) polyvinyl alcohol (PVOH);
an inner layer disposed on the inner face of the core layer, the inner layer including ethylene vinyl acetate (EVA) and homopolypropylene (HPP).

2. The non-oriented multilayer label assembly of claim 1 further comprising:
a tie layer disposed between the print-receptive outer layer and the core layer.

3. The non-oriented multilayer label assembly of claim 2 wherein the print-receptive outer layer includes polyvinyl alcohol (PVOH) and the tie layer includes anhydride-modified ethylene vinyl acetate polymers (G-MAH).

4. The non-oriented multilayer label assembly of any one of claims 1-3 wherein the core layer further includes a minority proportion of at least one alpha-olefin.

5. The non-oriented multilayer label assembly of claim 4 wherein the core layer includes about 60% ethylene vinyl acetate (EVA) and about 40% of at least one alpha-olefin.

6. The non-oriented multilayer label assembly of any one of claims 1-3 wherein the core layer includes about 100% of ethylene vinyl acetate (EVA).

7. The non-oriented multilayer label assembly of any one of claims 1-6 wherein the ethylene vinyl acetate (EVA) of the core layer includes 18% vinyl acetate.

8. The non-oriented multilayer label assembly of any one of claims 1-7 wherein the print-receptive layer includes (i) the blend including ethylene vinyl acetate (EVA) and homopolypropylene (HPP).

9. The non-oriented multilayer label assembly of claim 18 wherein the blend further includes an antiblock agent, optionally wherein the blend includes about 65% ethylene vinyl acetate (EVA); about 25% homopolypropylene (HPP), and about 10% antiblock agent; or wherein the blend further includes at least one alpha-olefin, for example wherein the blend includes about 39% ethylene vinyl acetate (EVA), about 25% homopolypropylene (HPP), about 26% at least one alpha-olefin, and about 10% antiblock agent.

10. The non-oriented multilayer label assembly of any one of claims 1-9 wherein the inner layer further includes an antiblock agent.

11. The non-oriented multilayer label assembly of claim 10 wherein the inner layer includes about 65% ethylene vinyl acetate (EVA), about 25% homopolypropylene (HPP), and about 10% antiblock agent.

12. The non-oriented multilayer label assembly of any one of claims 1 to 11 further comprising:
an adhesive layer disposed on the inner layer, optionally wherein the adhesive layer includes an adhesive selected from the group consisting of a hot melt adhesive, a solvent adhesive, and an emulsion adhesive, optionally wherein the adhesive is an emulsion adhesive and is an acrylic emulsion adhesive, optionally further comprising:
a release liner disposed on the adhesive layer, optionally wherein the release liner includes a polyethylene terephthalate (PET) substrate and a silicone coating on the substrate, the silicone coating in contact with the adhesive layer.

13. A method of labeling a heat shrinkable substrate, the method comprising:
providing a non-oriented multilayer label assembly including a core layer having at least a majority proportion of ethylene vinyl acetate (EVA), an outer layer disposed on the core layer, an inner layer disposed on the core layer, and at least one region of adhesive disposed on the inner layer;
providing a heat shrinkable substrate having an outer surface;
adhering the label assembly to the outer surface of the heat shrinkable substrate to form an intermediate assembly.

14. The method of claim 13 further comprising:
applying at least one indicia or marking on the outer layer of the label, optionally wherein the applying is performed by a printing operation, optionally wherein the applying is performed prior to adhering the label assembly to the substrate.

15. The method of any one of claims 13-14 wherein the conditions that result in heat shrinkage of the substrate include immersion in a liquid bath at a temperature of from about 70°C to about 90°C, for example wherein the temperature is from about 85°C to about 88°C, optionally wherein the conditions that result in heat shrinkage of the substrate include immersion in the liquid bath for a time period of less than 10 seconds.

## Patentansprüche

1. Nichtorientierte mehrlagige Etikettenanordnung zum Anbringen an einem verformbaren Paket, wobei das Etikett Folgendes umfasst:
eine Kernlage mit wenigstens einem Mehrheitsanteil an Ethylenvinylacetat (EVA), wobei die Kernlage eine Außenfläche und eine entgegengesetzt gerichtete Innenfläche definiert;
eine druckaufnehmende Außenlage, die auf der Außenfläche der Kernlage angeordnet ist, wobei die druckaufnehmende Außenlage eines der Folgenden beinhaltet:
(i) eine Mischung aus Ethylenvinylacetat (EVA) und Homopolypropylen (HPP), und
(ii) Polyvinylalkohol (PVOH);
eine auf der Innenfläche der Kernlage angeordnete Innenlage, wobei die Innenlage Ethylenvinylacetat (EVA) und Homopolypropylen (HPP) beinhaltet.

2. Nichtorientierte mehrlagige Etikettenanordnung nach Anspruch 1, die ferner Folgendes umfasst:
eine Haftvermittlerlage, die zwischen der druckaufnehmenden Außenlage und der Kernlage angeordnet ist.

3. Nichtorientierte mehrlagige Etikettenanordnung nach Anspruch 2, wobei die druckaufnehmende Außenlage Polyvinylalkohol (PVOH) beinhaltet und die Haftvermittlerlage Anhydrid-modifizierte EthylenVinylacetat-Polymere (G-MAH) beinhaltet.

4. Nichtorientierte mehrlagige Etikettenanordnung nach einem der Ansprüche 1-3, wobei die Kernlage ferner einen Minderheitsanteil von wenigstens einem Alpha-Olefin beinhaltet.

5. Nichtorientierte mehrlagige Etikettenanordnung nach Anspruch 4, wobei die Kernlage etwa 60 % Ethylenvinylacetat (EVA) und etwa 40 % von wenigstens einem Alpha-Olefin beinhaltet.

6. Nichtorientierte mehrlagige Etikettenanordnung nach einem der Ansprüche 1-3, wobei die Kernlage etwa 100 % Ethylenvinylacetat (EVA) beinhaltet.

7. Nichtorientierte mehrlagige Etikettenanordnung nach einem der Ansprüche 1-6, wobei das Ethylenvinylacetat (EVA) der Kernlage 18 % Vinylacetat beinhaltet.

8. Nichtorientierte mehrlagige Etikettenanordnung nach einem der Ansprüche 1-7, wobei die druckaufnehmende Lage (i) die Mischung mit Ethylenvinylacetat (EVA) und Homopolypropylen (HPP) beinhaltet.

9. Nichtorientierte mehrlagige Etikettenanordnung nach Anspruch 18, wobei die Mischung ferner ein Antiblockmittel beinhaltet, wobei die Mischung optional etwa 65 % Ethylenvinylacetat (EVA); etwa 25 % Homopolypropylen (HPP) und etwa 10 % Antiblockmittel beinhaltet; oder wobei die Mischung ferner wenigstens ein Alpha-Olefin beinhaltet, wobei die Mischung zum Beispiel etwa 39 % Ethylenvinylacetat (EVA), etwa 25 % Homopolypropylen (HPP), etwa 26 % von wenigstens Alpha-Olefin und etwa 10 % Antiblockmittel beinhaltet.

10. Nichtorientierte mehrlagige Etikettenanordnung nach einem der Ansprüche 1-9, wobei die Innenlage ferner ein Antiblockmittel beinhaltet.

11. Nichtorientierte mehrlagige Etikettenanordnung nach Anspruch 10, wobei die Innenlage etwa 65 % Ethylenvinylacetat (EVA), etwa 25 % Homopolypropylen (HPP) und etwa 10 % Antiblockmittel beinhaltet.

12. Nichtorientierte mehrlagige Etikettenanordnung nach einem der Ansprüche 1 bis 11, die ferner Folgendes umfasst:
eine Klebstofflage, die auf der Innenlage angeordnet ist, wobei die Klebstofflage optional einen Klebstoff beinhaltet, ausgewählt aus der Gruppe bestehend aus einem Heißschmelzklebstoff, einem Lösungsmittelklebstoff und einem Emulsionsklebstoff, wobei der Klebstoff optional ein Emulsionsklebstoff und ein Acrylemulsionsklebstoff ist, der optional ferner Folgendes umfasst:
eine Trennfolie, die auf der Klebstofflage angeordnet ist, wobei die Trennfolie optional ein Polyethylenterephthalat-(PET)-Substrat und eine Silikonbeschichtung auf dem Substrat beinhaltet, wobei die Silikonbeschichtung mit der Klebstofflage in Kontakt ist.

13. Verfahren zum Etikettieren eines wärmeschrumpfbaren Substrats, wobei das Verfahren Folgendes beinhaltet:
Bereitstellen einer nichtorientierten mehrlagigen Etikettenanordnung mit einer Kernlage mit wenigstens einem Mehrheitsanteil von Ethylenvinylacetat (EVA), einer auf der Kernlage angeordneten Außenlage, einer auf der Kernlage angeordneten Innenlage und wenigstens einer auf der Innenlage angeordneten Klebstoffregion;
Bereitstellen eines wärmeschrumpfbaren Substrats mit einer Außenfläche;
Kleben der Etikettenanordnung auf die Außenfläche des wärmeschrumpfbaren Substrats zum Bilden einer Zwischenanordnung.

14. Verfahren nach Anspruch 13, das ferner Folgendes beinhaltet:
Aufbringen wenigstens eines Zeichens oder einer Markierung auf die Außenlage des Etiketts, wobei das Aufbringen optional mit einem Druckvorgang erfolgt, wobei das Aufbringen optional vor dem Kleben der Etikettenanordnung auf das Substrat erfolgt.

15. Verfahren nach einem der Ansprüche 13-14, wobei die Bedingungen, die zum Wärmeschrumpfen des Substrats führen, das Eintauchen in ein Flüssigkeitsbad bei einer Temperatur von etwa 70°C bis etwa 90°C beinhalten, wobei die Temperatur zum Beispiel etwa 85°C bis etwa 88°C beträgt, wobei die Bedingungen, die zu Wärmeschrumpfung des Substrats führen, optional das Eintauchen in das Flüssigkeitsbad für eine Zeitperiode von weniger als 10 Sekunden beinhalten.

## Revendications

1. Ensemble d'étiquette multicouche non orienté adapté pour application à un emballage déformable, l'étiquette comprenant :
une couche centrale comprenant au moins une proportion majoritaire d'éthylène-acétate de vinyle (EVA), la couche centrale définissant une face extérieure et une face intérieure dirigée à l'opposé ;
une couche extérieure réceptive à l'impression sur la face extérieure de la couche centrale, la couche extérieure réceptive à l'impression comprenant l'un d'entre :
(i) un mélange comprenant de l'éthylène-acétate de vinyle (EVA) et de l'homopolypropylène (HPP), et
(ii) de l'alcool polyvinylique (PVOH) ;
une couche intérieure disposée sur la face intérieure de la couche centrale, la couche intérieure comprenant de l'éthylène-acétate de vinyle (EVA) et de l'homopolypropylène (HPP).

2. Ensemble d'étiquette multicouche non orienté selon la revendication 1, comprenant une couche d'attache disposée entre la couche extérieure réceptive à l'impression et la couche centrale.

3. Ensemble d'étiquette multicouche non orienté selon la revendication 2, dans lequel la couche extérieure réceptive à l'impression comprend de l'alcool polyvinylique (PVOH) et la couche d'attache comprend des copolymères d'éthylène-acétate de vinyle modifiés anhydride (G-MAH).

4. Ensemble d'étiquette multicouche non orienté selon l'une quelconque des revendications 1-3, dans lequel la couche centrale comprend en outre une proportion minoritaire d'au moins une alpha-oléfine.

5. Ensemble d'étiquette multicouche non orienté selon la revendication 4, dans lequel la couche centrale comprend environ 60 % d'éthylène-acétate de vinyle (EVA) et environ 40 % d'au moins une alpha-oléfine.

6. Ensemble d'étiquette multicouche non orienté selon l'une quelconque des revendications 1-3, dans lequel la couche centrale comprend environ 100 % d'éthylène-acétate de vinyle (EVA).

7. Ensemble d'étiquette multicouche non orienté selon l'une quelconque des revendications 1-6, dans lequel l'éthylène-acétate de vinyle (EVA) de la couche centrale comprend 18 % d'acétate de vinyle.

8. Ensemble d'étiquette multicouche non orienté selon l'une quelconque des revendications 1-7, dans lequel la couche réceptive à l'impression comprend (i) le mélange comprenant de l'éthylène-acétate de vinyle (EVA) et de l'homopolypropylène (HPP).

9. Ensemble d'étiquette multicouche non orienté selon la revendication 18, dans lequel le mélange comprend en outre un agent anti-bloquant, optionnellement dans lequel le mélange comprend environ 65 % d'éthylène-acétate de vinyle (EVA); environ 25 % d'homopolypropylène (HPP), et environ 10 % d'agent anti-bloquant; ou bien dans lequel le mélange comprend en outre au moins une alpha-oléfine, par exemple dans lequel le mélange comprend environ 39 % d'éthylène-acétate de vinyle (EVA), environ 25 % d'homopolypropylène (HPP), environ 26 % d'au moins une alpha-oléfine et environ 10 % d'agent anti-bloquant.

10. Ensemble d'étiquette multicouche non orienté selon l'une quelconque des revendications 1-9, dans lequel la couche intérieure comprend en outre un agent anti-bloquant.

11. Ensemble d'étiquette multicouche non orienté selon la revendication 10, dans lequel la couche intérieure comprend environ 65 % d'éthylène-acétate de vinyle (EVA), environ 25 % d'homopolypropylène (HPP), et environ 10 % d'agent anti-bloquant.

12. Ensemble d'étiquette multicouche non orienté selon l'une quelconque des revendications 1 à 11 comprenant en outre :
une couche adhésive disposée sur la couche intérieure, optionnellement dans lequel la couche adhésive comprend un adhésif sélectionné parmi le groupe consistant en un adhésif thermofusible, un adhésif au solvant, et un adhésif émulsion, optionnellement dans lequel l'adhésif est un adhésif émulsion et est un adhésif émulsion acrylique, comprenant optionnellement en outre :
une doublure de détachement disposée sur la couche adhésive, optionnellement dans lequel la doublure de détachement comprend un substrat de téréphtalate de polyéthylène (PET) et un revêtement de silicone sur le substrat, le revêtement de silicone étant en contact avec la couche adhésive.

13. Procédé d'étiquetage d'un substrat thermorétrécissable, le procédé comprenant:
fournir un ensemble d'étiquette multicouche non orienté comprenant une couche centrale ayant au moins une proportion majoritaire d'éthylène-acétate de vinyle (EVA), une couche extérieure disposée sur la couche centrale, une couche intérieure disposée sur la couche centrale, et au moins une région d'adhésif disposée sur la couche intérieure ;
fournir un substrat thermorétrécissable ayant une surface extérieure ;
coller l'ensemble d'étiquette à la surface extérieure du substrat thermorétrécissable pour former un ensemble intermédiaire.

14. Procédé selon la revendication 13, comprenant en outre :
appliquer au moins un indice ou une marque sur la couche extérieure de l'étiquette, optionnellement dans lequel l'application est effectuée par une opération d'impression, optionnellement dans lequel l'application est effectuée préalablement au collage de l'ensemble d'étiquette au substrat.

15. Procédé selon l'une quelconque des revendications 13-14, dans lequel les conditions qui résultent en un thermorétrécissement du substrat comprennent l'immersion dans un bain liquide à une température d'environ 70 °C à environ 90 °C, par exemple dans lequel la température est d'environ 85 °C à environ 88 °C, optionnellement dans lequel les conditions qui résultent en un thermorétrécissement du substrat comprennent l'immersion dans le bain liquide pendant une période de temps de moins de 10 secondes.
